# EUROPEAN PATENT SPECIFICATION

(11) **EP 3 197 123 B1**
(45) Date of publication and mention of the grant of the patent: **27.11.2019**
(21) Application number: 15851967.8
(22) Date of filing: 19.08.2015
(51) Int. Cl.: H04L 29/06

(54) **METHOD, TERMINAL, AND NETWORK SERVER FOR INFORMATION ENCRYPTION AND DECRYPTION AND KEY MANAGEMENT**
VERFAHREN, ENDGERÄT UND NETZWERKSERVER ZUR INFORMATIONSVERSCHLÜSSELUNG UND -ENTSCHLÜSSELUNG UND SCHLÜSSELVERWALTUNG
PROCÉDÉ, TERMINAL ET SERVEUR DE RÉSEAU POUR CHIFFREMENT ET DÉCHIFFREMENT D'INFORMATIONS, ET GESTION DE CLÉS

(30) Priority: 21.10.2014 CN 201410562747
(43) Date of publication of application: 26.07.2017
(73) Proprietor: ZTE Corporation, Shenzhen, Guangdong 518057 (CN)
(72) Inventor: CHEN, Lu, Shenzhen Guangdong 518057 (CN)
(74) Representative: Bandpay & Greuter
(86) International application number: PCT/CN2015/087535
(87) International publication number: WO 2016/062157

(56) References cited:
- WO-A1-01/74005
- WO-A1-2007/121587
- CN-A- 1 929 369
- CN-A- 103 595 793
- CN-A- 104 506 483
- US-B1- 6 567 914

## Description

### Technical Field

The present document relates to but not limited to the field of communication, in particular, to methods for information encryption, decryption and key management, terminals and a network server.

### Background

Some information and files need to be known by both communication parties only. Therefore, these information and files are encrypted to prevent file information from being stolen, what is seen in an intermediate transmission channel is all a cipher text and others cannot know information and files which are transmitted between both communication parties. With the wide application of mobile smart terminals, more and more hackers aim at mobile terminal users, and situations that files and information of users are stolen become more and more. Therefore, it is particularly important to effectively encrypt information and files of users in mobile terminals.

Further, users have a new communication demand. For example, when a terminal A transmits some information and information to a terminal B, under some special situations, the terminal A needs these information and files to be remotely destroyed by the terminal A at any time such that these information and files cannot be forwarded by the terminal B as evidences. However, up to now, no corresponding solution has already been put forward in the industry.

WO 2007121587A1 discloses dynamic distributed key system and method for identify management, authentication servers, data security preventing man-in-the-middle attacks.

WO 0174005A1 discloses one-time-pad encryption with central key service and keyable characters.

### Summary

The following is a summary of the subject described in detail in this text. The summary is not used for limiting the protection scope of the claims.

The embodiments of the present invention provide methods for information encryption, decryption and key invalidation control, terminals and a network server, which improves the security of information transmitted by the terminals and realizes that the terminal remotely controls the destruction of encrypted information.

In one aspect, an embodiment of the present invention provides an information encryption method, applied to a terminal side, and the method includes a transmitting terminal creating a random key on a network server; the transmitting terminal encrypting to-be-transmitted information according to a common key negotiated with a receiving terminal and the random key to obtain an encrypted cipher text, or the transmitting terminal encrypting to-be-transmitted information according to the random key to obtain an encrypted cipher text; and the transmitting terminal transmitting the encrypted cipher text to the receiving terminal.

In an exemplary embodiment, the random key includes a random key ID and a key corresponding to the random key ID, and the random key includes one or more pairs of random keys.

In an exemplary embodiment, the step of the transmitting terminal encrypting the to-be-transmitted information according to the common key and the random key to obtain an encrypted cipher text includes: generating a signature by adopting a signature algorithm for the common key; encrypting the random key ID by using the common key as a key, to generate a random key cipher text; encrypting the to-be-transmitted information by using a combination of the common key and a key corresponding to the random key ID as a key to obtain encrypted transmission information; and combining the signature, the random key cipher text and the encrypted transmission information to generate a final encrypted cipher text.

In an exemplary embodiment, the step of the transmitting terminal encrypting the to-be-transmitted information according to the random key to obtain the encrypted cipher text includes: the transmitting terminal encrypting the to-be-transmitted information according to the key corresponding to the random key ID to obtain encrypted transmission information, and adding the random key ID to generate a final encrypted cipher text.

In another aspect, an embodiment of the present invention further provides a method for key management based on the above information encryption method, and the method includes: after transmitting the encrypted cipher text to the receiving terminal, the transmitting terminal transmitting an instruction of deleting or freezing the random key to the network server, or the transmitting terminal setting a rule of deleting or freezing the random key on the network server.

In an exemplary embodiment, the step of the transmitting terminal setting a rule of deleting or freezing the random key on the network server includes one or more of the following: setting a timer, and deleting or freezing the random key when time after the random key is created on the network server reaches time set by the timer; and setting a threshold of times that the random key is queried by the same receiving terminal, and deleting or freezing the random key when times that the same receiving terminal queries the random key reach the threshold of times.

In an exemplary embodiment, the method further includes: the transmitting terminal transmitting an instruction of unfreezing the random key to the network server.

In an exemplary embodiment, after the transmitting terminal creates the random key on the network server, the method further includes: the transmitting terminal setting a query rule of the random key on the network server.

In an exemplary embodiment, the query rule of the random key includes one or more of the following rules: a list of users allowed to query the random key, times allowed to query the random key, and time periods allowed to query the random key.

In another aspect, an embodiment of the present invention further provides an information decryption method, applied to a terminal side, and the method includes: a receiving terminal receiving an encrypted cipher text transmitted by a transmitting terminal; and the receiving terminal acquiring a random key created by the transmitting terminal from a network server according to the encrypted cipher text, and after acquiring the random key, decrypting the encrypted cipher text by using a common key negotiated with the transmitting terminal and the random key, or decrypting the encrypted cipher text by using the random key.

In an exemplary embodiment, the encrypted cipher text contains a random key ID, and the step of the receiving terminal acquiring the random key created by the transmitting terminal from the network server according to the encrypted cipher text includes: the receiving terminal parsing the encrypted cipher text to acquire the random key ID, and acquiring the random key corresponding to the random key ID from the network server according to the random key ID.

In an exemplary embodiment, the encrypted cipher text includes: a signature, a random key cipher text and encrypted transmission information; and the step of the receiving terminal acquiring the random key created by the transmitting terminal from the network server, and if the random key is acquired, decrypting the encrypted cipher text by using the common key and the random key includes: the receiving terminal generating a signature by adopting a signature algorithm for the common key, judging whether the signature is consistent with the signature in the encrypted cipher text, decrypting the random key cipher text in the encrypted cipher text by using the common key to obtain a random key ID when the signature is consistent with the signature in the encrypted cipher text, querying the network server for a key corresponding to the random key ID according to the random key ID, and when the key corresponding to the random key ID is queried, decrypting the encrypted transmission information by using a combination of the common key and the acquired key corresponding to the random key ID as a key, to obtain transmission information of the transmitting terminal.

In another aspect, an embodiment of the present invention further provides an information encryption and decryption method, applied to a network side, and the method includes: after receiving a request for a transmitting terminal creating a random key, a network server creating and saving the random key, and transmitting the random key to the transmitting terminal; and after receiving a request for a receiving terminal acquiring a random key created by the transmitting terminal, the network server verifying the receiving terminal, and transmitting the queried random key to the receiving terminal after verification passes.

In an exemplary embodiment, the random key includes a random key ID and a key corresponding to the random key ID, and the random key includes one or more pairs of random keys.

In an exemplary embodiment, the step of verifying the receiving terminal includes: judging whether the request for the receiving terminal acquiring the random key created by the transmitting terminal carries the random key ID, if the request carries the random key ID, the verification being passed, and if the request does not carry the random key ID, the verification being failed.

In an exemplary embodiment, after verifying the receiving terminal and the verification passes, the method further includes: judging whether the random key exists or in an unfrozen state, and transmitting the queried random key to the receiving terminal when the random key exists or in the unfrozen state.

In an exemplary embodiment, after creating and saving the random key and transmitting the random key to the transmitting terminal, the method further includes: the network server receiving an instruction of deleting or freezing the random key transmitted by the transmitting terminal or receiving a rule of deleting or freezing the random key set by the transmitting terminal on the network server, and the network server deleting or freezing the random key according to the instruction or the rule.

In an exemplary embodiment, the rule of deleting or freezing the random key set by the transmitting terminal on the network server includes one or more of the following: setting a timer, and deleting or freezing the random key when time after the random key is created on the network server reaches time set by the timer; and setting a threshold of times that the random key is queried by the same receiving terminal, and deleting or freezing the random key when times that the same receiving terminal queries the random key reach the threshold of times.

In an exemplary embodiment, the method further includes: the network server receiving an instruction of unfreezing the random key transmitted by the transmitting terminal; unfreezing the random key according to the instruction.

In an exemplary embodiment, the request for the transmitting terminal creating the random key received by the network server further includes setting a query rule of the random key, and the method further includes: the network server setting a query rule of the random key when creating the random key; and when receiving the request for the receiving terminal acquiring the random key created by the transmitting terminal, performing an authentication according to the request, the authentication being passed when the request conforms to the query rule, and allowing the receiving terminal to query.

In an exemplary embodiment, the query rule of the random key includes one or more of the following rules: a list of users allowed to query the random key, times allowed to query the random key, and time periods allowed to query the random key.

In another aspect, an embodiment of the present invention further provides a terminal, and the terminal includes: a random key creation and maintenance module, configured to create a random key on a network server; an encryption module, configured to encrypt to-be-transmitted information according to a common key negotiated with a receiving terminal and the random key to obtain an encrypted cipher text, or encrypt to-be-transmitted information according to the random key to obtain an encrypted cipher text; and a transmission module, configured to transmit the encrypted cipher text to the receiving terminal.

In an exemplary embodiment, the random key includes a random key ID and a key corresponding to the random key ID, and the random key includes one or more pairs of random keys.

In an exemplary embodiment, the encryption module is configured to encrypt the to-be-transmitted information according to the common key and the random key to obtain the encrypted cipher text by the following mode: generating a signature by adopting a signature algorithm for the common key; encrypting the random key ID by using the common key as a key, to generate a random key cipher text; encrypting the to-be-transmitted information by using a combination of the common key and a key corresponding to the random key ID as a key to obtain encrypted transmission information; and combining the signature, the random key cipher text and the encrypted transmission information to generate a final encrypted cipher text.

In an exemplary embodiment, the encryption module is configured to encrypt the to-be-transmitted information according to the random key to obtain the encrypted cipher text by the following mode: encrypting the to-be-transmitted information according to the key corresponding to the random key ID to obtain encrypted transmission information, and adding the random key ID to generate a final encrypted cipher text.

In another aspect, an embodiment of the present invention further provides a terminal for key management based on the above terminal, and the terminal further includes: a key management module, configured to, after the transmission module transmits the encrypted cipher text to the receiving terminal, transmit an instruction of deleting or freezing the random key to the network server, or set a rule of deleting or freezing the random key on the network server.

In an exemplary embodiment, the key management module is configured to set the rule of deleting or freezing the random key on the network server according to one or more of the following modes: setting a timer, and deleting or freezing the random key when time after the random key is created on the network server reaches time set by the timer; and setting a threshold of times that the random key is queried by the same receiving terminal, and deleting or freezing the random key when times that the same receiving terminal queries the random key reach the threshold of times.

In an exemplary embodiment, the key management module is further configured to transmit an instruction of unfreezing the random key to the network server.

In an exemplary embodiment, the random key creation and maintenance module is further configured to, after creating the random key on the network server, set a query rule of the random key on the network server.

In an exemplary embodiment, the query rule of the random key includes one or more of the following rules: a list of users allowed to query the random key, times allowed to query the random key, and time periods allowed to query the random key.

In another aspect, an embodiment of the present invention further provides a terminal, and the terminal includes: a receiving module, configured to receive an encrypted cipher text transmitted by a transmitting terminal; and a decryption module, configured to acquire a random key created by the transmitting terminal from a network server according to the encrypted cipher text, and after acquiring the random key, decrypt the encrypted cipher text by using a common key negotiated with the transmitting terminal and the random key, or decrypt the encrypted cipher text by using the random key.

In an exemplary embodiment, the decryption module is configured to acquire the random key created by the transmitting terminal from the network server according to the encrypted cipher text by the following mode: parsing the encrypted cipher text to acquire a random key ID, and acquiring the random key corresponding to the random key ID from the network server according to the random key ID, herein the encrypted cipher text contains the random key ID.

In an exemplary embodiment, the encryption module is configured to acquire the random key created by the transmitting terminal from the network server, and if the random key is acquired, decrypt the encrypted cipher text by using the common key and the random key by the following mode: generating a signature by adopting a signature algorithm for the common key, judging whether the signature is consistent with a signature in the encrypted cipher text, decrypting a random key cipher text in the encrypted cipher text by using the common key to obtain a random key ID when the signature is consistent with the signature in the encrypted cipher text, querying the network server for a key corresponding to the random key ID according to the random key ID, and when the key corresponding to the random key ID is queried, decrypting encrypted transmission information in the encrypted cipher text by using a combination of the common key and the acquired key corresponding to the random key ID as a key, to obtain transmission information of the transmitting terminal, herein the encrypted cipher text includes: the signature, the random key cipher text and the encrypted transmission information.

In an exemplary embodiment, the decryption module is further configured to, prompt a user about that acquisition of the random key fails when decryption fails if the random key is not acquired.

According to another aspect, an embodiment of the present invention further provides a network server, and the network server includes: a receiving module, configured to receive a request for a transmitting terminal creating a random key, and receive a request for a receiving terminal acquiring a random key created by the transmitting terminal; a random key creation and maintenance module, configured to, after receiving the request for the transmitting terminal creating the random key, create and save the random key; a query module, configured to, after receiving the request for the receiving terminal acquiring the random key created by the transmitting terminal, verify the receiving terminal, and query the random key created by the transmitting terminal after verification passes; and a transmission module, configured to transmit the created random key to the transmitting terminal; and transmit the queried random key to the receiving terminal.

In an exemplary embodiment, the random key includes a random key ID and a key corresponding to the random key ID, and the random key includes one or more pairs of random keys.

In an exemplary embodiment, the query module is configured to verify the receiving terminal by the following mode: judging whether the request for the receiving terminal acquiring the random key created by the transmitting terminal carries the random key ID, if the request carries the random key ID, the verification being passed, and if the request does not carry the random key ID, the verification being failed.

In an exemplary embodiment, the query module is further configured to, after the receiving terminal is verified and the verification is passed, judge whether the random key exists or in an unfrozen state, and transmit the queried random key to the receiving terminal when the random key exists or in the unfrozen state.

In an exemplary embodiment, the receiving module is further configured to receive an instruction of deleting or freezing the random key transmitted by the transmitting terminal, or receive a rule of deleting or freezing the random key set by the transmitting terminal on the network server; and the random key creation and maintenance module is further configured to delete or freeze the random key according to the instruction or the rule.

In an exemplary embodiment, the rule of deleting or freezing the random key set by the transmitting terminal on the network server includes one or more of the following: setting a timer, and deleting or freezing the random key when time after the random key is created on the network server reaches time set by the timer; and setting a threshold of times that the random key is queried by the same receiving terminal, and deleting or freezing the random key when times that the same receiving terminal queries the random key reach the threshold of times.

In an exemplary embodiment, the receiving module is further configured to receive an instruction of unfreezing the random key transmitted by the transmitting terminal; and the random key creation and maintenance module is further configured to unfreeze the random key according to the instruction.

In an exemplary embodiment, the request for the transmitting terminal creating the random key further includes setting a query rule of the random key; the random key creation and maintenance module is further configured to set a query rule of the random key when the random key is created; and the query module is further configured to, when the receiving module receives the request for the receiving terminal acquiring the random key created by the transmitting terminal, perform an authentication according to the request, pass the authentication when the request conforms to the query rule, and allow the receiving terminal to query.

In an exemplary embodiment, the query rule of the random key includes one or more of the following rules: a list of users allowed to query the random key, times allowed to query the random key, and time periods allowed to query the random key.

In another aspect, an embodiment of the present invention further provides an information encryption and decryption system, which includes the above terminal, the above terminal and the above network server.

An embodiment of the present invention further provides a computer-readable storage medium storing computer-executable instructions used for executing the above information encryption method, the above information decryption method or the above information encryption and decryption method.

As compared with the existing technology, the methods for information encryption and decryption and key invalidation control, the terminals and the network server provided by the embodiments of the present invention, utilize the random key stored on the network server either independently or in combination with the common key to perform encryption or decryption, the receiving terminal needs to query the server for the random key, and the decryption of the encrypted cipher text can be completed only when the random key is acquired. Thus, the security of information transmitted by the terminal is improved. In addition, since the transmitting terminal deletes or freezes the random key on the network server, the receiving terminal is prevented from acquiring the random key and then performing decryption, and thus the transmitting terminal can remotely control the destruction of the encrypted information.

After reading and understanding the drawings and the detailed description, other aspects may be understood.

### Brief Description of Drawings

FIG. 1 illustrates a flowchart of an information encryption method in an embodiment of the present invention.
FIG. 2 illustrates a schematic diagram of a transmitting terminal A acquiring a randomly generated id and a corresponding key KEYser from a server before transmission in one application example.
FIG. 3 illustrates a schematic diagram of a transmitting terminal A transmitting a KEY which can only be known by the transmitting terminal A and a receiving terminal B to the receiving terminal B through a certain mode (not through a server) in one application example.
FIG. 4 illustrates a schematic diagram of component contents of an encrypted cipher text transmitted by A to B in one application example.
FIG. 5 illustrates a flowchart of an information decryption method in an embodiment of the present invention.
FIG. 6 illustrates a schematic diagram of a receiving terminal B querying a KEYser through an id from a server and then performing decryption to obtain a plain text in one application example.
FIG. 7 illustrates a schematic diagram of A requesting a network server for destroying a KEYser in one application example.
FIG. 8 illustrates a flowchart of an information encryption and decryption method in an embodiment of the present invention.
FIG. 9 illustrates a flowchart of an information encryption and decryption method in one application example.
FIG. 10 illustrates a schematic diagram of a process that B cannot perform decryption any longer after a KEYser is destroyed in one application example.
FIG. 11 illustrates a flowchart of an information encryption and decryption method in another application example.
FIG. 12 illustrates a structural diagram of a transmitting terminal in an embodiment of the present invention.
FIG. 13 illustrates a structural diagram of a transmitting terminal for key management based on the transmitting terminal illustrated in FIG. 12 in an embodiment of the present invention.
FIG. 14 illustrates a structural diagram of a receiving terminal in an embodiment of the present invention.
FIG. 15 illustrates a structural diagram of a network server in an embodiment of the present invention.

### Detailed Description

The embodiments of the present invention will be described below in detail in combination with the drawings. It shall be illustrated that the embodiments in the present application and the features in the embodiments may be mutually and freely combined under the situation of no conflict.

### Embodiment:

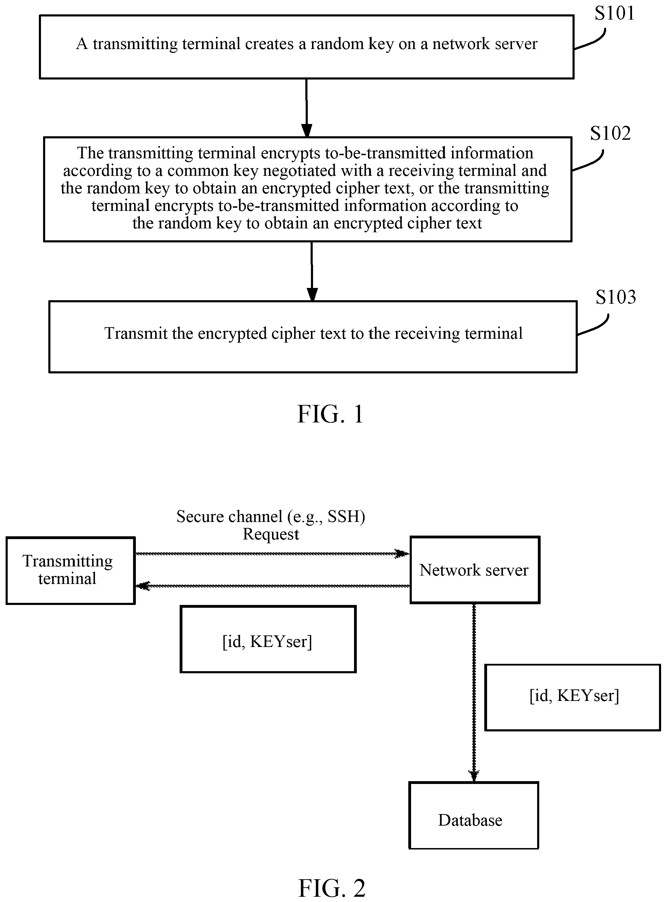

As illustrated in FIG. 1, the present embodiment provides an information encryption method, applied to a transmitting terminal side, and the method includes the following steps.

In step S101, a transmitting terminal creates a random key on a network server.

The random key includes a random key ID and a corresponding key, i.e., the random key is [id, KEYser]. The random key includes one or more pairs of random keys. Each pair of random keys is identified through id, and description information such as "dedicated for communication with sb." may be noted for each pair of random keys. The random ID needs to be long enough, such that the value range of ID is large enough, no repeated ID occurs during random generation and it is difficult to query through violent traversal.

In step S102, the transmitting terminal encrypts to-be-transmitted information according to a common key negotiated with a receiving terminal and the random key to obtain an encrypted cipher text, or the transmitting terminal encrypts to-be-transmitted information according to the random key to obtain an encrypted cipher text.

Herein, before steps S101 and S102, the method further includes that the transmitting terminal negotiates with the receiving terminal about the common key. For example, the transmitting terminal and the receiving terminal may verbally agree a common key KEY.

Herein, as an alternative mode, a mode of the transmitting terminal encrypting the to-be-transmitted information according to the common key and the random key to obtain the encrypted cipher text includes the following operations.

A signature is generated by adopting a signature algorithm for the common key.

The random key ID is encrypted by using the common key as a key, to generate a random key cipher text.

The to-be-transmitted information is encrypted by using a combination of the common key and a key corresponding to the random key ID as a key, to obtain encrypted transmission information.

The signature, the random key cipher text (a cipher text of the random key ID) and the encrypted transmission information are combined to generate a final encrypted cipher text.

Or, a part is added and a final generated encrypted cipher text includes the signature, the cipher text of the random key ID, a signature of a key corresponding to the random key ID and the encrypted transmission information. Herein, the added signature of the key corresponding to the random key ID is used for verifying whether the key corresponding to the random key ID returned from the server is correct.

Or, a component part is removed. For example, the signature is removed, and the structure becomes two parts, i.e., the random key cipher text and the encrypted transmission information.

In the present embodiment, the mode of the transmitting terminal encrypting the to-be-transmitted information according to the common key and the random key to obtain the encrypted cipher text is not limited to the several above-mentioned modes and may include various modes, so long as the generated encrypted cipher text contains the random key ID and the encrypted transmission information.

Herein, there are various modes of using a combination of the common key and the key corresponding to the random key ID as the key. For example, an exclusive or operation may be performed to the common key and the random key, and an obtained result is used as the key. Of course, the mode is not limited to the exemplary mode. It is the existing technology here and thus is not repetitively described.

Herein, the step of the transmitting terminal encrypting the to-be-transmitted information according to the random key to obtain the encrypted cipher text includes the following operations.

The transmitting terminal encrypts the to-be-transmitted information according to the key corresponding to the random key ID to obtain encrypted transmission information, and adds the random key ID to generate a final encrypted cipher text.

In the present embodiment, there are also various modes that the transmitting terminal encrypts the to-be-transmitted information according to the random key to obtain the encrypted cipher text, e.g., the signature of the key corresponding to the random key ID is added, and the modes are not repetitively described here, so long as the finally generated encrypted cipher text contains the random key ID and the encrypted transmission information.

In step S103, the transmitting terminal transmits the encrypted cipher text to the receiving terminal.

In the present embodiment, the random key on the network server is not enough to decrypt the encrypted cipher text, i.e., the network server cannot know information and files which are transmitted between two communication parties. Thus, hackers can be prevented from acquiring the key from the network server to decrypt the encrypted cipher text.

In one application example, FIG. 2 illustrates a schematic diagram of a transmitting terminal A acquiring a randomly generated id and a corresponding key KEYser from a server before transmission. As shown in FIG. 2, A requests a server through a secure channel (such as a secure shell protocol) for randomly generating an id and a corresponding key KEYser. The server randomly generates a pair of [id, KEYser]. The id needs to be long enough (e.g., 128 bits), such that the randomly generated id is not repeated and is difficult for traversal. The network server C stores the pair of the random key [id, KEYser] into a database, and returns [id, KEYser] to A through the secure channel.

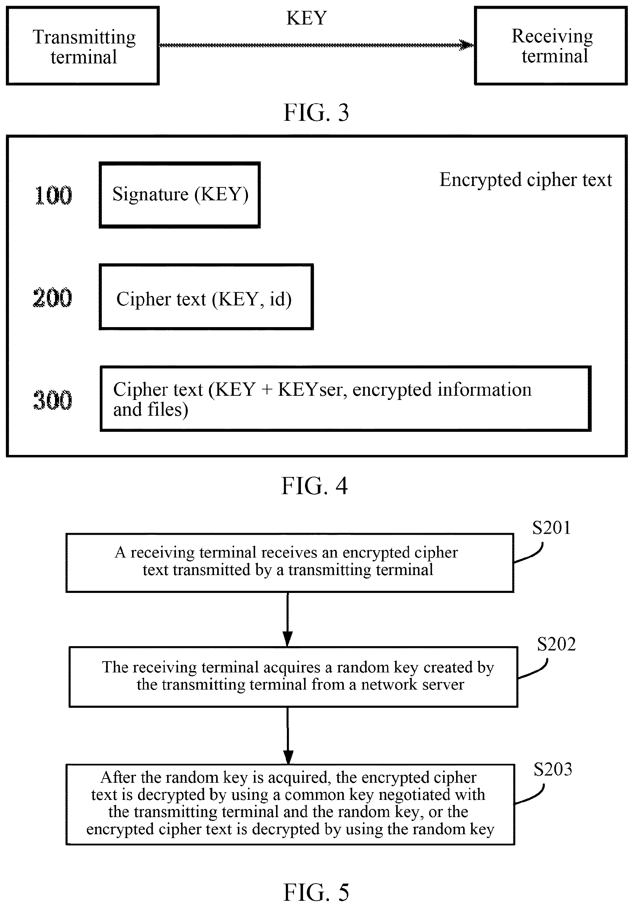

FIG. 3 illustrates a schematic diagram of a transmitting terminal A transmitting a KEY which can only be known by the transmitting terminal A and a receiving terminal B to the receiving terminal B through a certain mode (not through a server). Herein, that key must be kept confidential, such that others including the network server, which are unrelated to the current communication, cannot decrypt the transmission information and files. A preferred mode is that A has been agreed a key with B in advance, and they verbally transmit the key with each other.

FIG. 4 illustrates a schematic diagram of component contents of an encrypted cipher text transmitted by A to B, herein:
100 represents a signature made for a common key KEY (e.g., through an md5 or sha algorithm), and the signature is used for verifying the receiving terminal B.
200 represents a cipher text which is generated through an encryption algorithm (e.g., 128-bit AES) by using the common key KEY as a key and an id as a plain text. Therefore, the id cannot be known if there is no common key KEY.
300 represents a cipher text which is generated through the encryption algorithm (e.g., 128-bit AES) by using a combination of the common key KEY and the random key KEYser as a key and information and files transmitted at the current time as a plain text. The decryption cannot be performed when any one of the common key KEY and the random key KEYser is lacked.

As illustrated in FIG. 5, the present embodiment provides an information decryption method, applied to a receiving terminal side, and the method includes the following steps.

In step S201, a receiving terminal receives an encrypted cipher text transmitted by a transmitting terminal.

In step S202, the receiving terminal acquires a random key created by the transmitting terminal from the network server.

Herein, an alternative mode of the receiving terminal transmitting to the network server a request for acquiring a random key created by the transmitting terminal is that: the request carries a username and a login password for the receiving terminal to log in the network server, to facilitate the network server to perform a login authentication to the terminal. Of course, it is not excluded that the request carries other information used for the login authentication performed by the network server.

In step S203, after the random key is acquired, the encrypted cipher text is decrypted by using a common key negotiated with the transmitting terminal and the random key, or the encrypted cipher text is decrypted by using the random key.

Herein, before the above-mentioned step, the method further includes: the receiving terminal negotiates with the transmitting terminal about the common key. The common key described here is the same as the common key in the encryption method provided in FIG. 1.

In the present embodiment, the method of the receiving terminal decrypting the encrypted cipher text according to the common key and the random key or only according to the random key corresponds to the encryption mode on the transmitting terminal side. However, the random key ID needs to be finally obtained through parsing from the encrypted cipher text, and then the key corresponding to the random key ID is acquired from the network server to decrypt the encrypted transmission information.

As an alternative mode, corresponding to the transmitting terminal side, the encrypted cipher text includes the signature, the random key cipher text and the encrypted transmission information.

Steps S203 and S204 specifically include the following operations.

The receiving terminal generates the signature by adopting a signature algorithm for the common key. The receiving terminal judges whether the signature is consistent with the signature in the encrypted cipher text, and if consistent, decrypts the random key cipher text in the encrypted cipher text by using the common key to obtain the random key ID. The receiving terminal queries the network server for the key corresponding to the random key ID according to the random key ID (i.e., the request for acquiring the random key created by the transmitting terminal, which is transmitted by the receiving terminal to the network server, further carries the random key ID). If querying the key corresponding to the random key ID, the receiving terminal decrypts the encrypted cipher text by using a combination of the common key and the acquired key corresponding to the random key ID as a key, to obtain transmission information.

Herein, as an alternative mode, the encrypted cipher text contains the random key ID, and the step of the receiving terminal acquiring the random key created by the transmitting terminal from the network server according to the encrypted cipher text includes: the receiving terminal parses the encrypted cipher text to acquire the random key ID, and acquires the random key corresponding to the random key ID from the network server according to the random key ID.

In addition, the method further includes that: the decryption fails if the random key is not acquired, and a user is prompted about that the acquisition of the random key fails.

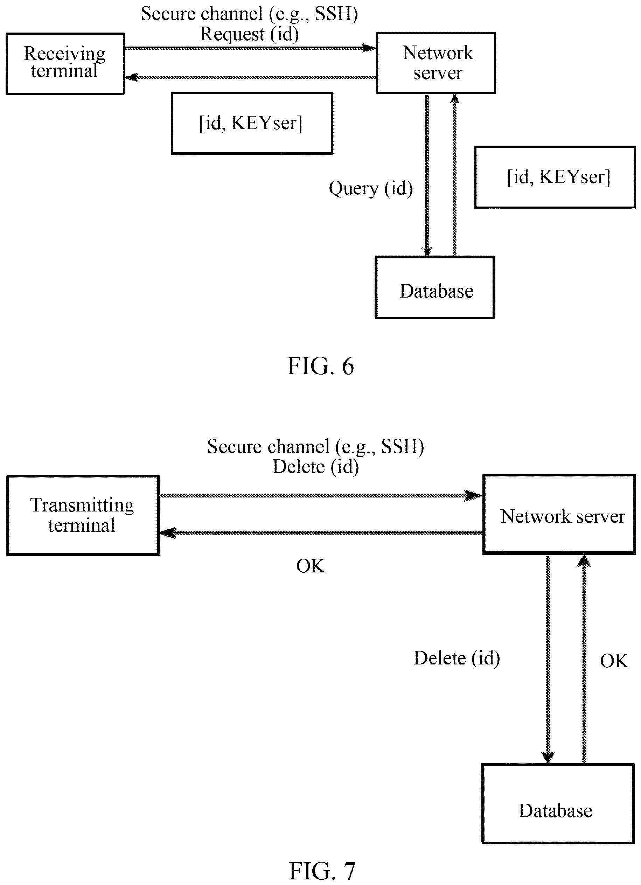

In one application example, FIG. 6 illustrates a schematic diagram of a receiving terminal B querying a KEYser through an id from a server and then performing decryption to obtain a plain text. Herein the receiving terminal B actually refers to a client which runs on B and receives a cipher text. B decrypts to obtain an id by using the common key KEY, and then transmits a request to a network server C through a secure channel (e.g., SSH), in which a parameter of the request carries the id. C receives the id and queries a data base to obtain the key KEYser corresponding to the id, and returns the key KEYser to B. At this moment, B knows the common key KEY and KEYser, and can perform decryption to obtain the transmitted information and files.

Herein, the receiving terminal B is not allowed to save the KEYser, the transmitted information and files obtained through decryption. The restriction is executed by the receiving terminal B.

Based on the above-mentioned information encryption and decryption methods, the present embodiment further provides a method for key management, and the method includes the following step.

After transmitting the encrypted information and the encrypted cipher text to the receiving terminal, the transmitting terminal transmits an instruction of deleting or freezing the random key to the network server, or the transmitting terminal sets a rule of deleting or freezing the random key on the network server.

Herein, the step of the transmitting terminal setting the rule of deleting or freezing the random key on the network server includes one or more of the following operations.

A timer is set, and the random key is deleted or frozen when time after the random key is created on the network server reaches time set by the timer.

For example, during an actual implementation, the time is set through the timer, and the random key may be automatically deleted/frozen after n created days. Or, the random key is automatically deleted/frozen on a certain day.

A threshold of times that the random key is queried by the same receiving terminal is set, and the random key is deleted or frozen when times that the same receiving terminal queries the random key reach the threshold of times.

The method further includes that: the transmitting terminal transmits an instruction of unfreezing the random key to the network server.

As an alternative mode, in step S102, after the transmitting terminal creates the random key on the network server, the present method further includes that: the transmitting terminal sets a query rule of the random key on the network server.

The query rule of the random key includes but not limited to one or more of the following rules: a list of users allowed to query the random key, times allowed to query the random key, and time periods allowed to query the random key.

Herein, as most of websites, each user needs to register a username and a password on the network server. The list of users includes one or more usernames, and the username may be a mobile phone number of a terminal user, or may also be a nickname named by the user itself. The times for querying the random key refer to that the times that the key corresponding to the same random key ID should not exceed certain times. The time periods for querying the random key refer to that some random keys can only be queried at certain time periods in a day.

In one application example, FIG. 7 illustrates a schematic diagram of A requesting a network server for destroying a KEYser. Herein A transmits a request to the server through the secure channel, and the parameter in the request carries an id. The server deletes [id, KEYser] saved in the database after the authentication passes.

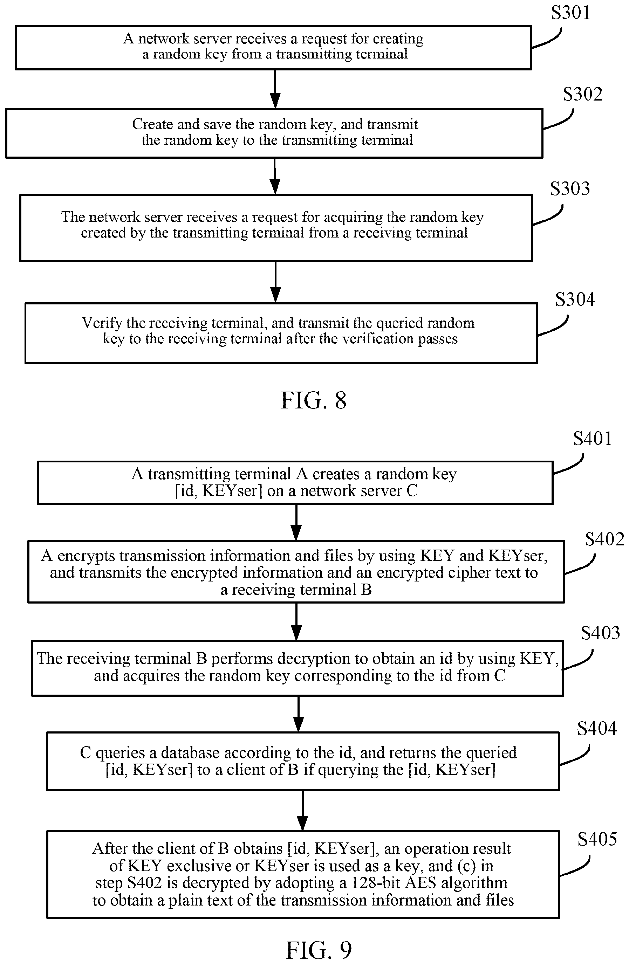

As illustrated in FIG. 8, the present embodiment provides an information encryption and decryption method, applied to a network side, including the following steps.

In step S301, a network server receives a request for creating a random key from a transmitting terminal.

In step S302, a random key is created and saved, and the random key is transmitted to the transmitting terminal.

Herein, the random key includes a random key ID and a corresponding key, i.e., the random key is [id, KEYser]. The random key includes one or more pairs of random keys, each pair of random keys is identified through the id, and description information such as "dedicated for communication with sb." may be noted for each pair of random keys.

In step S303, the network server receives a request for acquiring the random key created by the transmitting terminal from a receiving terminal.

As an alternative mode, the request for creating the random key received by the network server from the transmitting terminal further includes setting a query rule of the random key, and the method further includes the following steps.

The network server sets the query rule of the random key when creating the random key. The network server authenticates the request for acquiring the random key created by the transmitting terminal from the receiving terminal according to the query rule. The authentication is passed when the request conforms to the query rule, and the receiving terminal can query.

Herein, the query rule of the random key includes one or more of the following rules: a list of users allowed to query the random key, times allowed to query the random key, and time periods allowed to query the random key.

In step S304, the receiving terminal is verified and the queried random key is transmitted to the receiving terminal after verification passes.

Herein, the step of verifying the receiving terminal includes the following operations.

Whether the request for acquiring the random key created by the transmitting terminal from the receiving terminal carries the random key ID is judged. If the request carries the random key ID, the verification is passed, and if the request does not carry the random key ID, the verification is failed.

Since a situation that the random key has already been deleted or frozen (in a non-queryable state) exists, in step S304, after the receiving terminal is verified and the verification is passed, the method further includes that: whether the random key exists or in an unfrozen state (a queryable state) is judged, and the queried random key is transmitted to the receiving terminal when the random key exists or in the unfrozen state.

Herein, after step S302, the method further includes the following steps.

In step S302a, the network server receives an instruction of deleting or freezing the random key transmitted by the transmitting terminal or receives a rule of deleting or freezing the random key set by the transmitting terminal on the network server.

Herein, the rule of deleting or freezing the random key set by the transmitting terminal on the network server includes one or more of the following operations.

A timer is set, and the random key is deleted or frozen when time after the random key is created on the network server reaches time set by the timer.

A threshold of times that the random key is queried by the same receiving terminal is set, and the random key is deleted or frozen when times that the same receiving terminal queries the random key reach the threshold of times.

In step S302b, the random key is deleted or frozen according to the instruction or the rule.

Herein, the method further includes the following steps.

The network server receives an instruction of unfreezing the random key transmitted by the transmitting terminal, and unfreezes the random key according to the instruction.

In one application example, A represents a transmitting terminal, B represents a receiving terminal, and C represents a network server. Both A and B register usernames and passwords on C. In advance A and B verbally agree a key KEY (common key) which is known by A and B. A mode of encryption/decryption by the common key and the random key is adopted. As illustrated in FIG. 9, the information encryption and decryption method includes the following steps.

In step S401, the transmitting terminal A logs in the network server C by using the username and the password of A itself through a browser for accessing an HTTPS webpage or through an SSH channel established by a dedicated client end, creates a pair of [id, KEYser] and fills for the pair of [id, KEYser] a description such as "dedicated for communication with sb." which can be recognized by human. Before the client used by A transmits the encrypted information and the encrypted cipher text, A is required to designate the [id, KEYser] used for the current communication.

In the present implementation example, a query rule may be set for each pair of [id, KEYser]. The optional rules include the rules described above, and thus are not repetitively described here.

In the present implementation example, each pair of [id, KEYser] may be manually deleted/frozen/unfrozen, and may also be deleted/frozen by setting the corresponding rules on C. Freezing is not deletion. However, [id, KEYser] in a frozen state cannot be queried by other users except for A. A deletion/freezing rule may be set for each pair of [id, KEYser]. An optional deletion/freezing rule can be the rule described above and thus is not described here.

In step S402, the transmitting terminal A encrypts the transmitted information and files by using the KEY and KEYser, and transmits an encrypted cipher text to the receiving terminal B.

Herein, the encrypted cipher text transmitted by A to B consists of the following three parts:
(a) a signature generated for KEY by adopting a md5 algorithm;
(b) a random key cipher text obtained through encryption performed to an id by using KEY as a key and adopting a 128-bit AES algorithm;
(c) an encrypted cipher text generated through adopting a 128-bit AES algorithm by using an operation result of KEY exclusive or KEYser as a key and information and files transmitted at the current time as a plain text.

In step S403, after a client used by the receiving terminal B receives the encrypted information and files, the receiving terminal B is requested to input the KEY. A signature is generated for the key input by B by using the md5 algorithm and is compared with (a) in step S402 after the input of B is obtained. It is indicated that B input the correct KEY if consistent. (b) in step S402 is decrypted by using the KEY to obtain an id. The client establishes an SSH channel with C, logs in C by using the user name and the password of the client itself, and initiates query to C, herein the parameters are the id, and the username and password of B.

In step S404, the network server C queries a database according to the id, and returns the queried [id, KEYser] to the client of the receiving terminal B if a matching result is queried (and the state is a "non-frozen" state).

C returns null to the client of B if no matching result is queried.

Herein, after step S403, if A sets a query rule, C will perform authentication to the request of the client of B according to the query rule. If the username in the request is on the list of users allowed to access, which is set by the transmitting terminal A, the authentication passes and step S404 is continuously executed.

Or, after step S404 is executed, the network server C further performs authentication to the receiving terminal B according to the query rule, and step S405 is executed if the authentication passes.

In step S405, after the client of B obtains the [id, KEYser], (c) in step S402 is decrypted by using an operation result of KEY exclusive or KEYser as a key and adopting a 128-bit AES algorithm, to obtain the plain text of the transmitted information and files. The client used by B stores the [id, KEYser] and the plain text obtained through decryption into an internal memory, and does not provide a function of transferring them to a storage device. The receiving terminal B can view the information and files obtained through decryption by using this dedicated client only. Once the client exits, both the [id, KEY] and the plain text obtained through decryption in the internal memory will disappear.

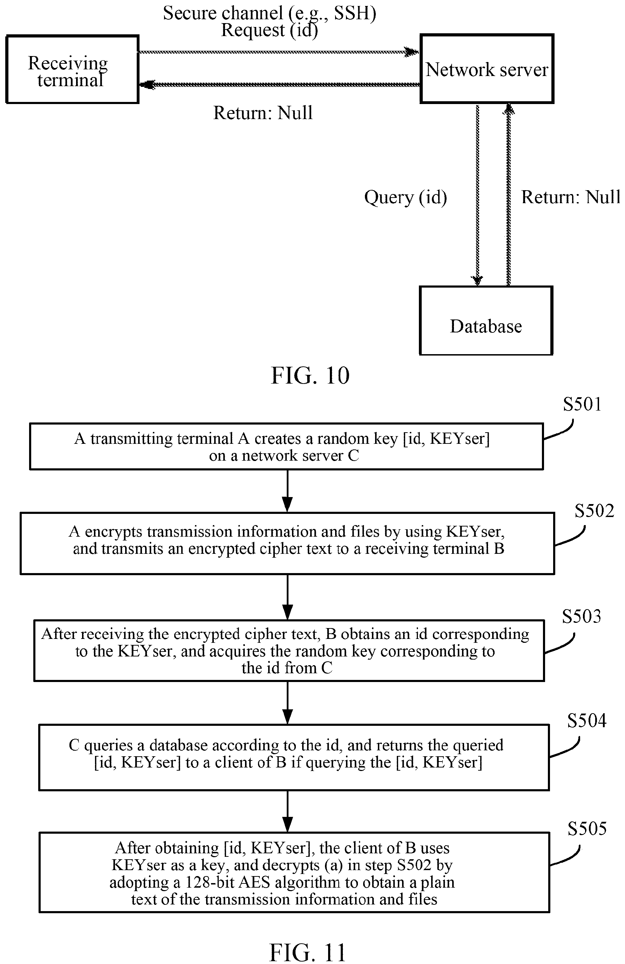

If the [id, KEYser] on the network server C has already been deleted or frozen, the receiving terminal B cannot acquire the KEYser. FIG. 10 illustrates a schematic diagram of a process that B cannot perform decryption any longer after a KEYser is destroyed. As shown in FIG. 10, the receiving terminal B performs decryption to obtain an id by using the KEY, and then transmits a request to the network server C through a secure channel (e.g., an SSH), in which the parameter of the request carries the id. The network server C receives the id and queries the database, but the KEYser cannot be queried since the KEYser has already been destroyed. At this moment, the network server C returns null to the receiving terminal B. The receiving terminal B only has the common key KEY and cannot perform decryption to obtain the transmitted information and files. Thereby, the encrypted information and files actually have been destroyed already and there is only a pile of messy codes.

In one application example, A represents a transmitting terminal, B represents a receiving terminal and C represents a network server. The transmitting terminal A and the receiving terminal B both register usernames and passwords on the server network C. The transmitting terminal A needs not to agree a common key with the receiving terminal B in advance, and the encryption or decryption is performed by using a random key. As shown in FIG. 11, an information encryption and decryption method includes the following steps.

Step S501 is the same as step S401, and thus is not repetitively described here.

In step S502, the transmitting terminal A encrypts the transmitted information and files by using KEYser and transmits an encrypted cipher text to the receiving terminal B.

Herein, the encrypted cipher text transmitted by the transmitting terminal A to the receiving terminal B consists of the following two parts:
(a) an encrypted cipher text generated through adopting a 128-bit AES algorithm by using the KEYser as a key and the information and files transmitted at the current time as a plain text;
(b) an id corresponding to the KEYser.

In step S503, after a client used by the receiving terminal B receives the encrypted cipher text, the client obtains the id corresponding to the KEYser. Then the client establishes an SSH channel with the network server C, logs in the network server C by using the username and the password of the receiving terminal B itself, and initiates a query to the network server C, herein the parameters are the id and the username and password of the receiving terminal B.

Step S504 is the same as step S404, and thus is not repetitively described here.

In step S505, after the client of the receiving terminal B obtains the [id, KEYser], (a) in step S502 is decrypted by using the KEYser as a key and adopting a 128-bit AES algorithm, to obtain the plain text of the transmitted information and files. The client used by the receiving terminal B stores the [id, KEYser] and the plain text obtained through decryption into an internal memory, but does not provide a function of transferring them to a storage device. The receiving terminal B can view the information and files obtained through decryption by using this dedicated client only. Once the client exits, the [id, KEYser] and the plain text obtained through decryption in the internal memory will disappear.

If the [id, KEYser] on the network server C has already been deleted or frozen, the receiving terminal B cannot acquire the KEYser. FIG. 10 illustrates a schematic diagram of a process that a receiving terminal B cannot perform decryption any longer after a KEYser is destroyed. As shown in FIG. 10, the receiving terminal B performs decryption to obtain an id by using the KEY, and then transmits a request to the network server C through a secure channel (e.g., an SSH), in which the parameter of the request carries the id. The network server C receives the id and queries the database, but the KEYser cannot be queried since the KEYser has already been destroyed. At this moment, the network server C returns null to the receiving terminal B. The receiving terminal B only has the common key KEY and cannot perform decryption to obtain the transmitted information and files. Thereby, the encrypted information and files actually have been destroyed already and there is only a pile of messy codes.

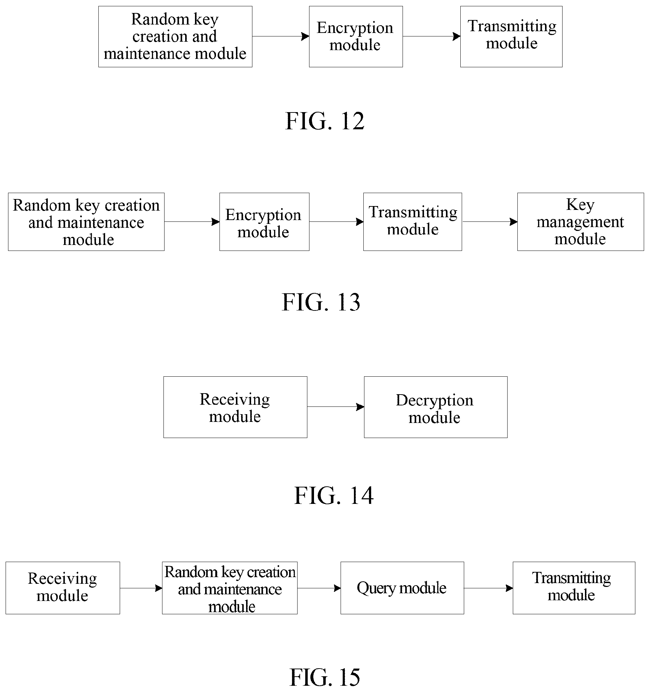

As illustrated in FIG. 12, the present embodiment provides a transmitting terminal for information encryption. The transmitting terminal includes a processor and a program storage device, and the program storage device is used for storing modules including computer-readable instructions. The transmitting terminal includes: a random key creation and maintenance module, an encryption module and a transmission module.

The random key creation and maintenance module is configured to create a random key on a network server.

The random key includes a random key ID and a corresponding key, and the random key includes one or more pairs of random keys.

The encryption module is configured to encrypt to-be-transmitted information according to a common key negotiated with a receiving terminal and the random key to obtain an encrypted cipher text, or encrypt to-be-transmitted information according to the random key to obtain an encrypted cipher text.

The transmission module is configured to transmit the encrypted cipher text to the receiving terminal.

Herein, as an alternative mode, the terminal further includes a common key negotiation module configured to negotiate with the receiving terminal about the common key.

Herein, as an alternative mode, the encryption module is configured to encrypt the to-be-transmitted information according to the common key and the random key to obtain the encrypted cipher text by the following mode: generating a signature by adopting a signature algorithm for the common key, encrypting the random key ID by using the common key as a key, to generate a random key cipher text, encrypting the to-be-transmitted information by using a combination of the common key and a key corresponding to the random key ID as a key to obtain encrypted transmission information, and combining the signature, the random key cipher text and the encrypted transmission information to generate a final encrypted cipher text.

Herein, as an alternative mode, the encryption module is configured to encrypt the to-be-transmitted information according to the random key to obtain the encrypted cipher text by the following mode: encrypting the to-be-transmitted information according to the key corresponding to the random key ID to obtain encrypted transmission information, and adding the random key ID to generate a final encrypted cipher text.

As illustrated in FIG. 13, the present embodiment further provides a transmitting terminal for key management based on the transmitting terminal illustrated in FIG. 12. As illustrated in FIG. 13, in addition to modules included in FIG. 12, the transmitting terminal further includes a key management module.

The key management module is configured to, after the transmission module transmits the encrypted cipher text to the receiving terminal, transmit an instruction of deleting or freezing the random key to the network server, or set a rule of deleting or freezing the random key on the network server.

The key management module is configured to set the rule of deleting or freezing the random key on the network server according to one or more of the following modes. A timer is set, and the random key is deleted or frozen when time after the random key is created on the network server reaches time set by the timer. A threshold of times that the random key is queried by the same receiving terminal is set, and the random key is deleted or frozen when times that the same receiving terminal queries the random key reach the threshold of times.

Herein, the key management module is further configured to transmit an instruction of unfreezing the random key to the network server.

Herein, the random key creation and maintenance module is further configured to, after creating the random key on the network server, set a query rule of the random key on the network server.

Herein, the query rule of the random key includes one or more of the following rules: a list of users allowed to query the random key, times allowed to query the random key, and time periods allowed to query the random key.

As illustrated in FIG. 14, the present embodiment provides a receiving terminal for information decryption. The receiving terminal includes a processor and a program storage device, and the program storage device is used for storing modules including computer-readable instructions. The receiving terminal includes: a receiving module, and a decryption module.

The receiving module is configured to receive an encrypted cipher text transmitted by a transmitting terminal.

The decryption module is configured to acquire a random key created by the transmitting terminal from a network server according to the encrypted cipher text, and after acquiring the random key, decrypt the encrypted cipher text by using a common key negotiated with the transmitting terminal and the random key, or decrypt the encrypted cipher text by using the random key.

Herein, as an alternative mode, the terminal further includes a common key negotiation module used for negotiating with the transmitting terminal about the common key.

Herein, as an alternative mode, the decryption module is configured to acquire the random key created by the transmitting terminal from the network server according to the encrypted cipher text by the following mode: parsing the encrypted cipher text to acquire a random key ID, and acquiring the random key corresponding to the random key ID from the network server according to the random key ID. The encrypted cipher text contains the random key ID.

Herein, as an alternative mode, the encryption module is configured to acquire the random key created by the transmitting terminal from the network server, and when the random key is acquired, decrypt the encrypted cipher text by using the common key and the random key by the following mode. The receiving terminal generates a signature by adopting a signature algorithm for the common key, judges whether the signature is consistent with a signature in the encrypted cipher text, if consistent, decrypts a random key cipher text in the encrypted cipher text by using the common key to obtain a random key ID, queries the network server for a key corresponding to the random key ID according to the random key ID, and when the key corresponding to the random key ID is queried, decrypting encrypted transmission information by using a combination of the common key and the acquired key corresponding to the random key ID as a key, to obtain transmission information of the transmitting terminal. The encrypted cipher text comprises: the signature, the random key cipher text and the encrypted transmission information.

Besides, the decryption module is further configured to prompt a user about that acquisition of the random key fails when decryption fails if the random key is not acquired.

As illustrated in FIG. 15, the present embodiment provides a network server. the server includes a processor and a program storage device, and the program storage device is used for storing modules including computer-readable instructions. The server includes: a receiving module, a random key creation and maintenance module, a query module, and a transmission module.

The receiving module is configured to receive a request for creating a random key from a transmitting terminal and receive a request for acquiring a random key created by the transmitting terminal from a receiving terminal.

The random key creation and maintenance module is configured to, after receiving the request for creating the random key from the transmitting terminal, create and save the random key.

Herein, the random key includes a random key ID and a corresponding key, and the random key includes one or more pairs of random keys.

Herein, as an alternative mode, the receiving module is further configured to receive an instruction of deleting or freezing the random key transmitted by the transmitting terminal, or receive a rule of deleting or freezing the random key set by the transmitting terminal on the network server. The random key creation and maintenance module is further configured to delete or freeze the random key according to the instruction or the rule.

Herein the rule of deleting or freezing the random key set by the transmitting terminal on the network server comprises one or more of the following rules.

A timer is set, and the random key is deleted or frozen when time after the random key is created on the network server reaches time set by the timer.

A threshold of times that the random key is queried by the same receiving terminal is set, and the random key is deleted or frozen when times that the same receiving terminal queries the random key reach the threshold of times.

Herein, as an alternative mode, the receiving module is further configured to receive an instruction of unfreezing the random key transmitted by the transmitting terminal. The random key creation and maintenance module is further configured to unfreeze the random key according to the instruction.

A query module is configured to, after receiving the request for acquiring the random key created by the transmitting terminal from the receiving terminal, verify the receiving terminal.

Herein the query module is configured to verify the receiving terminal by the following mode. It is judged whether the request for acquiring the random key created by the transmitting terminal from the receiving terminal carries the random key ID. if yes, the verification is passed, otherwise, the verification is failed.

Herein the query module is further configured to, after the receiving terminal is verified and the verification is passed, judge whether the random key exists or in an unfrozen state (queryable state), and transmit the queried random key to the receiving terminal when the random key exists or in the unfrozen state.

Herein as an alternative mode, the request for creating the random key from the transmitting terminal further includes setting a query rule of the random key.

The random key creation and maintenance module is further configured to set a query rule of the random key when the random key is created.

The query module is further configured to, when the receiving module receives the request for acquiring the random key created by the transmitting terminal from the receiving terminal, perform an authentication according to the request, pass the authentication when the request conforms to the query rule, and allow the receiving terminal to query.

Herein the query rule of the random key includes one or more of the following rules: a list of users allowed to query the random key, times allowed to query the random key, and time periods allowed to query the random key.

The transmission module is configured to transmit the created random key to the transmitting terminal, and transmit the queried random key to the receiving terminal after the verification passes.

Besides, the present embodiment further provides an information encryption and decryption system, including the transmitting terminal, the receiving terminal and the network server as mentioned above.

From the above-mentioned embodiments, it can be seen that, as compared with the existing technology, the methods for information encryption and decryption and key invalidation control, the terminals and the network server provided by the above-mentioned embodiments, utilize the random key stored on the network server either independently or in combination with the common key to perform encryption or decryption, the receiving terminal needs to query the server for the random key, and the decryption of the encrypted cipher text can be completed only when the random key is acquired. Thus, the security of information transmitted by the terminal is improved. In addition, since the transmitting terminal deletes or freezes the random key on the network server, the receiving terminal is prevented from acquiring the random key and then performing decryption, and thus the transmitting terminal can remotely control the destruction of the encrypted information.

One skilled in the art can understand that all or partial steps in the above-mentioned methods may be completed by relevant hardware instructed by a program, and the program may be stored in a computer-readable storage medium such as a read-only memory, a magnetic disc or a compact disc, etc. The above-mentioned relevant instructions may be executed by a processor to implement corresponding methods. Optionally, all or partial steps in the above-mentioned embodiments may also be implemented by using one or more integrated circuits. Correspondingly, each module/unit in the above-mentioned embodiments may be implemented by means of hardware and may also be implemented by means of a software function module. The present invention is not limited to combinations of hardware and software in any specific form.

The above-mentioned embodiments are just specific embodiments of the present invention and shall not hereby limit the protection scope of the present invention. There may be other various embodiments according to the contents of the present invention. One skilled in the art may make various corresponding modifications and variations according to the present invention without departing from the scope of the present invention. However, any modifications, equivalent replacements, improvements and the like made within the spirit and rule of the present invention shall be all included in the protection scope of the present invention.

### Industrial Applicability

The embodiments of the present invention utilize the random key stored on the network server either independently or in combination with the common key to perform encryption or decryption, the receiving terminal needs to query the server for the random key, and the decryption of the encrypted cipher text can be completed only when the random key is acquired. Thus, the security of information transmitted by the terminal is improved. In addition, since the transmitting terminal deletes or freezes the random key on the network server, the receiving terminal is prevented from acquiring the random key and then performing decryption, and thus the transmitting terminal can remotely control the destruction of the encrypted information.

## Claims

1. A terminal, comprising:
a random key creation and maintenance module, configured to create a random key on a network server;
an encryption module, configured to encrypt to-be-transmitted information according to a common key negotiated with a receiving terminal and the random key to obtain an encrypted cipher text; and
a transmission module, configured to transmit the encrypted cipher text to the receiving terminal, wherein
the random key comprises a random key ID and a key corresponding to the random key ID; wherein, the encryption module is configured to encrypt the to-be-transmitted information according to the common key and the random key to obtain the encrypted cipher text by the following mode:
generating a signature by adopting a signature algorithm for the common key;
encrypting the random key ID by using the common key as a key, to generate a random key cipher text;
encrypting the to-be-transmitted information by using a combination of the common key and a key corresponding to the random key ID as a key to obtain encrypted transmission information; and
combining the signature, the random key cipher text and the encrypted transmission information to generate the encrypted cipher text..

2. The terminal according to claim 1, further comprising:
a key management module, configured to, after the transmission module transmits the encrypted cipher text to the receiving terminal, transmit an instruction of deleting or freezing the random key to the network server, or set a rule of deleting or freezing the random key on the network server;
wherein
the key management module is configured to set the rule of deleting or freezing the random key on the network server according to one or more of the following modes:
setting a timer, and deleting or freezing the random key when time after the random key is created on the network server reaches time set by the timer, and
setting a threshold of times that the random key is queried by the same receiving terminal, and deleting or freezing the random key when times that the same receiving terminal queries the random key reach the threshold of times; and
the key management module is further configured to transmit an instruction of unfreezing the random key to the network server.

3. The terminal according to claim 2, wherein
the random key creation and maintenance module is further configured to, after creating the random key on the network server, set a query rule of the random key on the network server.

4. The terminal according to claim 3, wherein
the query rule of the random key comprises one or more of the following:
a list of users allowed to query the random key;
times allowed to query the random key; and
time periods allowed to query the random key.

5. The terminal according to any one of claims 1-4, wherein the terminal is used as a receiving terminal which comprises:
a receiving module, configured to receive an encrypted cipher text transmitted by a transmitting terminal; and
a decryption module, configured to acquire a random key created by the transmitting terminal from a network server according to the encrypted cipher text, and after acquiring the random key, decrypt the encrypted cipher text by using a common key negotiated with the transmitting terminal and the random key.

6. The terminal according to claim 5, wherein
the decryption module is configured to acquire the random key created by the transmitting terminal from the network server according to the encrypted cipher text by the following mode:
parsing the encrypted cipher text to acquire a random key ID, and acquiring the random key corresponding to the random key ID from the network server according to the random key ID,
wherein the encrypted cipher text contains the random key ID.

7. The terminal according to claim 5, wherein
the encryption module is configured to acquire the random key created by the receiving terminal from the network server, and when the random key is acquired, decrypt the encrypted cipher text by using the common key and the random key by the following mode:
generating a signature by adopting a signature algorithm for the common key, judging whether the signature is consistent with a signature in the encrypted cipher text, decrypting a random key cipher text in the encrypted cipher text by using the common key to obtain a random key ID when the signature is consistent with the signature in the encrypted cipher text, querying the network server for a key corresponding to the random key ID according to the random key ID, and when the key corresponding to the random key ID is queried, decrypting encrypted transmission information in the encrypted cipher text by using a combination of the common key and the acquired key corresponding to the random key ID as a key, to obtain transmission information of the transmitting terminal,
wherein the encrypted cipher text comprises: the signature, the random key cipher text and the encrypted transmission information.

8. An information encryption method, applied to a terminal side, comprising:
creating, by a transmitting terminal, a random key on a network server (S101);
encrypting, by the transmitting terminal, to-be-transmitted information according to a common key negotiated with a receiving terminal and the random key to obtain an encrypted cipher text (S102); and
transmitting, by the transmitting terminal, the encrypted cipher text to the receiving terminal (S103); wherein
the random key comprises a random key ID and a key corresponding to the random key ID wherein,
the step of the transmitting terminal encrypting the to-be-transmitted information according to the common key and the random key to obtain an encrypted cipher text (S102) comprises:
generating a signature by adopting a signature algorithm for the common key;
encrypting the random key ID by using the common key as a key, to generate a random key cipher text;
encrypting the to-be-transmitted information by using a combination of the common key and a key corresponding to the random key ID as a key, to obtain encrypted transmission information; and
combining the signature, the random key cipher text and the encrypted transmission information to generate the encrypted cipher text.

9. A method for key management based on the information encryption method according to claim 8, further comprising:
after transmitting the encrypted cipher text to the receiving terminal, transmitting, by the transmitting terminal, an instruction of deleting or freezing the random key to the network server, or setting, by the transmitting terminal, a rule of deleting or freezing the random key on the network server; wherein
the step of the transmitting terminal setting the rule of deleting or freezing the random key on the network server comprises one or more of the following:
setting a timer, and deleting or freezing the random key when time after the random key is created on the network server reaches time set by the timer; and
setting a threshold of times that the random key is queried by the same receiving terminal, and deleting or freezing the random key when times that the same receiving terminal queries the random key reach the threshold of times; and
the transmitting terminal transmitting an instruction of unfreezing the random key to the network server.

10. The method according to claim 9, the method further comprises:
the transmitting terminal setting a query rule of the random key on the network server.

11. The method according to claim 10, wherein the query rule of the random key comprises one or more of the following:
a list of users allowed to query the random key;
times allowed to query the random key; and
time periods allowed to query the random key.

12. An information decryption method corresponding to the information encryption method in claim 8, applied to a terminal side, comprising:
receiving, by a receiving terminal, an encrypted cipher text transmitted by a transmitting terminal (S201); and
acquiring, by the receiving terminal, a random key created by the transmitting terminal from a network server according to the encrypted cipher text (S202), and after acquiring the random key, decrypting the encrypted cipher text by using a common key negotiated with the transmitting terminal and the random key (S203).

13. The method according to claim 12, wherein
the encrypted cipher text contains a random key ID, and the step of the receiving terminal acquiring the random key created by the transmitting terminal from the network server according to the encrypted cipher text comprises:
the receiving terminal parsing the encrypted cipher text to acquire the random key ID, and acquiring the random key corresponding to the random key ID from the network server according to the random key ID.

14. The method according to claim 12, wherein
the encrypted cipher text comprises: a signature, a random key cipher text and encrypted transmission information; and
the step of the receiving terminal acquiring the random key created by the receiving terminal from the network server, and if the random key is acquired, decrypting the encrypted cipher text by using the common key and the random key comprises:
the receiving terminal generating a signature by adopting a signature algorithm for the common key, judging whether the signature is consistent with the signature in the encrypted cipher text, decrypting the random key cipher text in the encrypted cipher text by using the common key to obtain a random key ID when the signature is consistent with the signature in the encrypted cipher text, querying the network server for a key corresponding to the random key ID according to the random key ID, and when the key corresponding to the random key ID is queried, decrypting the encrypted transmission information by using a combination of the common key and the acquired key corresponding to the random key ID as a key, to obtain transmission information of the transmitting terminal.

## Patentansprüche

1. Endgerät, umfassend:
ein Zufallsschlüsselerzeugungs- und -pflegemodul, das zur Erzeugung eines Zufallsschlüssels auf einem Netzwerkserver konfiguriert ist,
ein Verschlüsselungsmodul, das derart konfiguriert ist, dass es zu sendende Daten gemäß einem mit mit einer Empfangsstation ausgehandelten gemeinsamen Schlüssel und dem Zufallsschlüssel verschlüsselt, um einen verschlüsselten Geheimtext zu erhalten, und
ein Sendemodul, das zum Senden des verschlüsselten Geheimtextes an die Empfangsstation konfiguriert ist, wobei
der Zufallsschlüssel eine Zufallsschlüsselkennung und einen der Zufallsschlüsselkennung entsprechenden Schlüssel umfasst,
wobei
das Verschlüsselungsmodul derart konfiguriert ist, dass es die zu sendenden Daten gemäß dem gemeinsamen Schlüssel und dem Zufallsschlüssel verschlüsselt, um auf folgende Weise den verschlüsselten Geheimtext zu erhalten:
Erzeugen einer Signatur durch Übernehmen eines Signaturalgorithmus für den gemeinsamen Schlüssel,
Verschlüsseln der Zufallsschlüsselkennung mit dem gemeinsamen Schlüssel als Schlüssel, um einen Geheimtext des Zufallsschlüssels zu erzeugen,
Verschlüsseln der zu sendenden Daten mit einer Kombination aus dem gemeinsamen Schlüssel und einem der Zufallsschlüsselkennung entsprechenden Schlüssel als Schlüssel, um verschlüsselte Übertragungsdaten zu erhalten, und
Kombinieren der Signatur, des Geheimtextes des Zufallsschlüssels und der verschlüsselten Übertragungsdaten, um einen verschlüsselten Geheimtext zu erzeugen.

2. Endgerät nach Anspruch 1, ferner umfassend:
ein Schlüsselverwaltungsmodul, das derart konfiguriert ist, dass es, nachdem das Sendemodul den verschlüsselten Geheimtext an die Empfangsstation sendet, einen Befehl zum Löschen oder Einfrieren des Zufallsschlüssels an den Netzwerkserver sendet oder eine Regel zum Löschen oder Einfrieren des Zufallsschlüssels auf dem Netzwerkserver festlegt,
wobei
das Schlüsselverwaltungsmodul derart konfiguriert ist, dass es die Regel zum Löschen oder Einfrieren des Zufallsschlüssels auf dem Netzwerkserver auf eine von folgenden Weisen festlegt:
Einstellen eines Timers und Löschen oder Einfrieren des Zufallsschlüssel, wenn die seit der Erzeugung des Zufallsschlüssels auf dem Netzwerkserver abgelaufene Zeit die vom Timer festgelegte Zeit erreicht, und
Festlegen einer Obergrenze für Abfragen des Zufallsschlüssels durch eine Empfangsstation und Löschen oder Einfrieren des Zufallsschlüssels, wenn die Abfragen des Zufallsschlüssels durch die Empfangsstation die Obergrenze erreichen, und
das Schlüsselverwaltungsmodul ferner zum Senden eines Befehls zum Freigeben des Zufallsschlüssels an den Netzwerksender konfiguriert ist.

3. Endgerät nach Anspruch 2, wobei:
das Zufallsschlüsselerzeugungs- und -pflegemodul ferner derart konfiguriert ist, dass es nach der Erzeugung des Zufallsschlüssels auf dem Netzwerkserver eine Abfrageregel über den Zufallsschlüssel auf dem Netzwerkserver festlegt.

4. Endgerät nach Anspruch 3, wobei:
die Abfrageregel über den Zufallsschlüssel mindestens einen folgender Inhalte umfasst:
eine Auflistung der Nutzer, die den Zufallsschlüssel abfragen dürfen,
wievielmal der Zufallsschlüssel abgefragt werden darf und
Zeiträume, in denen der Zufallsschlüssel abgefragt werden darf.

5. Endgerät nach einem der Ansprüche 1 - 4, wobei das Endgerät als Empfangsstation verwendet wird, welche umfasst:
ein Empfangsmodul, das zum Empfangen eines von einer Sendestation gesendeten verschlüsselten Geheimtextes konfiguriert ist, und
ein Entschlüsselungsmodul, das derart konfiguriert ist, dass es gemäß dem verschlüsselten Geheimtext einen von der Sendestation erzeugten Zufallsschlüssel bei einem Netzwerkserver erwirbt und nach dem Erwerb des Zufallsschlüssels den verschlüsselten Geheimtext mit einem mit der Sendestation ausgehandelten gemeinsamen Schlüssel und dem Zufallsschlüssel entschlüsselt.

6. Endgerät nach Anspruch 5, wobei:
das Entschlüsselungsmodul derart konfiguriert ist, dass es den von der Sendestation erzeugten Zufallsschlüssel vom Netzwerkserver gemäß dem verschlüsselten Geheimtext auf folgende Weise erwirbt:
Analysieren des verschlüsselten Geheimtextes, um eine Zufallsschlüsselkennung zu erwerben, und Erwerben des Zufallsschlüssels, der der Zufallsschlüsselkennung entspricht, beim Netzwerkserver gemäß der Zufallsschlüsselkennung,
wobei der verschlüsselte Geheimtext die Zufallsschlüsselkennung enthält.

7. Endgerät nach Anspruch 5, wobei:
das Verschlüsselungsmodul derart konfiguriert ist, dass es den von der Sendestation erzeugten Zufallsschlüssel erwirbt und bei Erwerb des Zufallsschlüssels den verschlüsselten Geheimtext mit dem gemeinsamen Schlüssel und dem Zufallsschlüssel auf folgende Weise entschlüsselt:
Erzeugen einer Signatur durch Übernehmen eines Signaturalgorithmus für den gemeinsamen Schlüssel, Beurteilen, ob die Signatur mit einer Signatur im verschlüsselten Geheimtext übereinstimmt, Entschlüsseln eines Geheimtextes des Zufallsschlüssels im verschlüsselten Geheimtext mit dem gemeinsamen Schlüssel, um eine Zufallsschlüsselkennung zu erhalten, wenn die Signatur mit der Signatur im verschlüsselten Geheimtext übereinstimmt, Abfragen des Netzwerkservers nach einem Schlüssel, der der Zufallsschlüsselkennung entspricht, gemäß der Zufallsschlüsselkennung und Entschlüsseln verschlüsselter Übertragungsdaten im verschlüsselten Geheimtext mit einer Kombination aus dem gemeinsamen Schlüssel und dem erworbenen Schlüssel, der der Zufallsschlüsselkennung entspricht, als Schlüssel, um Übertragungsdaten der Sendestation zu erhalten, wenn der der Zufallsschlüsselkennung entsprechende Schlüssel abgefragt wird,
wobei der verschlüsselte Geheimtext umfasst: die Signatur, den Geheimtext des Zufallsschlüssels und die verschlüsselten Übertragungsdaten.

8. Endgerätsseitig angewandtes Verfahren zum Entschlüsseln von Daten, umfassend:
Erzeugen eines Zufallsschlüssel auf einem Netzwerkserver (S101) durch eine Sendestation,
Verschlüsseln zu sendender Daten gemäß einem mit mit einer Empfangsstation ausgehandelten gemeinsamen Schlüssel und dem Zufallsschlüssel durch die Sendestation, um einen verschlüsselten Geheimtext zu erhalten (S 102), und
Senden des verschlüsselten Geheimtextes an die Empfangsstation durch die Sendestation (S 103), wobei
der Zufallsschlüssel eine Zufallsschlüsselkennung und einen der Zufallsschlüsselkennung entsprechenden Schlüssel umfasst,
wobei
der Schritt des Verschlüsselns der zu sendenden Daten gemäß dem gemeinsamen Schlüssel und dem Zufallsschlüssel durch die Sendestation, um einen verschlüsselten Geheimtext zu erhalten (S102), umfasst:
Erzeugen einer Signatur durch Übernehmen eines Signaturalgorithmus für den gemeinsamen Schlüssel,
Verschlüsseln der Zufallsschlüsselkennung mit dem gemeinsamen Schlüssel als Schlüssel, um einen Geheimtext des Zufallsschlüssels zu erzeugen,
Verschlüsseln der zu sendenden Daten mit einer Kombination aus dem gemeinsamen Schlüssel und einem der Zufallsschlüsselkennung entsprechenden Schlüssel als Schlüssel, um verschlüsselte Übertragungsdaten zu erhalten, und
Kombinieren der Signatur, des Geheimtextes des Zufallsschlüssels und der verschlüsselten Übertragungsdaten, um einen verschlüsselten Geheimtext zu erzeugen.

9. Verfahren zur Verwaltung eines Schlüssels aufgrund des Datenverschlüsselungsverfahrens nach Anspruch 8, ferner umfassend:
Senden eines Befehls zum Löschen oder Einfrieren des Zufallsschlüssels an den Netzwerkserver durch die Sendestation oder Festlegen einer Regel zum Löschen oder Einfrieren des Netzwerkservers durch die Sendestation nach dem Senden des verschlüsselten Geheimtextes an die Empfangsstation, wobei
der Schritt des Festlegens der Regel zum Löschen oder Einfrieren des Zufallsschlüssels auf dem Netzwerkserver durch die Sendestation mindestens eines von folgenden Schritten umfasst:
Einstellen eines Timers und Löschen oder Einfrieren des Zufallsschlüssel, wenn die seit der Erzeugung des Zufallsschlüssels auf dem Netzwerkserver abgelaufene Zeit die vom Timer festgelegte Zeit erreicht, und
Festlegen einer Obergrenze für Abfragen des Zufallsschlüssels durch eine Empfangsstation und Löschen oder Einfrieren des Zufallsschlüssels, wenn die Abfragen des Zufallsschlüssels durch die Empfangsstation die Obergrenze erreichen, und
Senden eines Befehls zum Freigeben des Zufallsschlüssels an den Netzwerkserver durch die Sendestation.

10. Verfahren nach Anspruch 9, wobei das Verfahren ferner umfasst:
Festlegen einer Regel über Abfragen des Zufallsschlüssel auf dem Netzwerkserver durch die Sendestation.

11. Verfahren nach Anspruch 10, wobei die Abfrageregel über den Zufallsschlüssel mindestens einen von folgenden Inhalten umfasst:
eine Auflistung der Nutzer, die den Zufallsschlüssel abfragen dürfen,
wievielmal der Zufallsschlüssel abgefragt werden darf und
Zeiträume, in denen der Zufallsschlüssel abgefragt werden darf.

12. Dem Verfahren nach Anspruch 8 entsprechendes, endgerätsseitig angewandtes Verfahren zum Verschlüsseln von Daten, umfassend:
Empfangen eines von einer Sendestation gesendeten verschlüsselten Geheimtextes durch eine Empfangsstation (S201) und
Erwerben eines von der Sendestation erzeugten Zufallsschlüssels bei einem Netzwerkserver gemäß dem verschlüsselten Geheimtext durch die Empfangsstation (S202) und Entschlüsseln des verschlüsselten Geheimtextes mit einem mit der Sendestation ausgehandelten gemeinsamen Schlüssel und dem Zufallsschlüssel nach dem Erwerb des Zufallsschlüssels (S203).

13. Verfahren nach Anspruch 12, wobei:
der verschlüsselte Geheimtext eine Zufallsschlüsselkennung enthält und der Schritt des Erwerbens des durch die Sendestation erzeugten Zufallsschlüssel beim Netzwerkserver durch die Empfangsstation gemäß dem verschlüsselten Geheimtext umfasst:
Analysieren des verschlüsselten Geheimtextes durch die Empfangsstation, um eine Zufallsschlüsselkennung zu erwerben, und Erwerben des Zufallsschlüssels, der der Zufallsschlüsselkennung entspricht, beim Netzwerkserver gemäß der Zufallsschlüsselkennung.

14. Verfahren nach Anspruch 12, wobei:
der verschlüsselte Geheimtext umfasst: eine Signatur, einen Geheimtext des Zufallsschlüssels und verschlüsselte Übertragungsdaten und
der Schritt des Erwerbens des von der Empfangsstation erzeugten Zufallsschlüssels und des Entschlüsselns des verschlüsselten Geheimtextes mit dem gemeinsamen Schlüssel und dem Zufallsschlüssel bei Erwerb des Zufallsschlüssels durch die Empfangsstation umfasst:
Erzeugen einer Signatur durch Übernehmen eines Signaturalgorithmus für den gemeinsamen Schlüssel durch die Empfangsstation, Beurteilen, ob die Signatur mit der Signatur im verschlüsselten Geheimtext übereinstimmt, Entschlüsseln des Geheimtextes des Zufallsschlüssels im verschlüsselten Geheimtext mit dem gemeinsamen Schlüssel, um eine Zufallsschlüsselkennung zu erhalten, wenn die Signatur mit der Signatur im verschlüsselten Geheimtext übereinstimmt, Abfragen des Netzwerkservers nach einem der Zufallsschlüsselkennung entsprechenden Schlüssel gemäß der Zufallsschlüsselkennung und Entschlüsseln der verschlüsselten Übertragungsdaten mit einer Kombination aus dem gemeinsamen Schlüssel und dem erworbenen Schlüssel, der der Zufallsschlüsselkennung entspricht, als Schlüssel, um Übertragungsdaten der Sendestation zu erhalten, wenn der der Zufallsschlüsselkennung entsprechende Schlüssel abgefragt wird.

## Revendications

1. Terminal comprenant :
un module de création et de maintenance de clés aléatoires, configuré de manière à créer une clé aléatoire sur un serveur de réseau ;
un module de chiffrement, configuré de manière à chiffrer des informations à transmettre selon une clé commune négociée avec un terminal récepteur et la clé aléatoire, en vue d'obtenir un cryptogramme chiffré ; et
un module de transmission, configuré de manière à transmettre le cryptogramme chiffré au terminal récepteur, dans lequel :
la clé aléatoire comprend un identificateur, ID, de clé aléatoire et une clé correspondant à l'identificateur de clé aléatoire ;
dans lequel,
le module de chiffrement est configuré de manière à chiffrer les informations à transmettre selon la clé commune et la clé aléatoire, en vue d'obtenir le cryptogramme chiffré, selon le mode suivant mettant en œuvre les étapes ci-dessous consistant à :
générer une signature en adoptant un algorithme de signature pour la clé commune ;
chiffrer l'identificateur de clé aléatoire en utilisant la clé commune, en tant que clé, en vue de générer un cryptogramme de clé aléatoire ;
chiffrer les informations à transmettre en utilisant une combinaison de la clé commune et d'une clé correspondant à l'identificateur de clé aléatoire, en tant que clé, en vue d'obtenir des informations de transmission chiffrées ; et
combiner la signature, le cryptogramme de clé aléatoire et les informations de transmission chiffrées, en vue de générer le cryptogramme chiffré.

2. Terminal selon la revendication 1, comprenant en outre :
un module de gestion de clés, configuré de manière à, après que le module de transmission à transmis le cryptogramme chiffré au terminal récepteur, transmettre une instruction de suppression ou de blocage de la clé aléatoire au serveur de réseau, ou définir une règle de suppression ou de blocage de la clé aléatoire sur le serveur de réseau ;
dans lequel :
le module de gestion de clés est configuré de manière à définir la règle de suppression ou de blocage de la clé aléatoire sur le serveur de réseau selon un ou plusieurs des modes suivants mettant en œuvre les étapes ci-dessous consistant à :
définir un temporisateur, et supprimer ou bloquer la clé aléatoire lorsque l'heure après la création de la clé aléatoire sur le serveur de réseau atteint l'heure définie par le temporisateur ; et
définir un seuil de temps au cours duquel la clé aléatoire est interrogée par le même terminal récepteur, et supprimer ou bloquer la clé aléatoire lorsque les heures où le même terminal récepteur interroge la clé aléatoire atteignent le seuil de temps ; et
le module de gestion de clés est en outre configuré de manière à transmettre une instruction de déblocage de la clé aléatoire au serveur de réseau.

3. Terminal selon la revendication 2, dans lequel :
le module de création et de maintenance de clés aléatoires est en outre configuré de manière à, suite à la création de la clé aléatoire sur le serveur de réseau, définir une règle d'interrogation de la clé aléatoire sur le serveur de réseau.

4. Terminal selon la revendication 3, dans lequel :
la règle d'interrogation de la clé aléatoire comprend un ou plusieurs des éléments suivants :
une liste d'utilisateurs autorisés à interroger la clé aléatoire ;
des heures autorisées pour interroger la clé aléatoire ; et
des périodes de temps autorisées pour interroger la clé aléatoire.

5. Terminal selon l'une quelconque des revendications 1 à 4, dans lequel le terminal est utilisé en qualité de terminal récepteur, lequel comprend :
un module de réception, configuré de manière à recevoir un cryptogramme chiffré transmis par un terminal émetteur ; et
un module de déchiffrement, configuré de manière à acquérir une clé aléatoire créée par le terminal émetteur, auprès d'un serveur de réseau, selon le cryptogramme chiffré, et après avoir acquis la clé aléatoire, à déchiffrer le cryptogramme chiffré en utilisant une clé commune négociée avec le terminal émetteur et la clé aléatoire.

6. Terminal selon la revendication 5, dans lequel :
le module de déchiffrement est configuré de manière à acquérir la clé aléatoire créée par le terminal émetteur, auprès du serveur de réseau, selon le cryptogramme chiffré, selon le mode suivant mettant en œuvre les étapes ci-dessous consistant à :
analyser le cryptogramme chiffré en vue d'acquérir un identificateur de clé aléatoire, et acquérir la clé aléatoire correspondant à l'identificateur de clé aléatoire, auprès du serveur de réseau, selon l'identificateur de clé aléatoire,
dans lequel le cryptogramme chiffré contient l'identificateur de clé aléatoire.

7. Terminal selon la revendication 5, dans lequel :
le module de chiffrement est configuré de manière à acquérir la clé aléatoire créée par le terminal récepteur, auprès du serveur de réseau, et lorsque la clé aléatoire est acquise, à déchiffrer le cryptogramme chiffré en utilisant la clé commune et la clé aléatoire, selon le mode suivant mettant en œuvre les étapes ci-dessous consistant à :
générer une signature en adoptant un algorithme de signature pour la clé commune, évaluer si la signature est compatible avec une signature dans le cryptogramme chiffré, déchiffrer un cryptogramme de clé aléatoire dans le cryptogramme chiffré en utilisant la clé commune en vue d'obtenir un identificateur de clé aléatoire lorsque la signature est compatible avec la signature dans le cryptogramme chiffré, interroger le serveur de réseau en ce qui concerne une clé correspondant à l'identificateur de clé aléatoire selon l'identificateur de clé aléatoire, et lorsque la clé correspondant à l'identificateur de clé aléatoire est interrogée, déchiffrer des informations de transmission chiffrées dans le cryptogramme chiffré en utilisant une combinaison de la clé commune et de la clé acquise correspondant à l'identificateur de clé aléatoire, en tant que clé, en vue d'obtenir des informations de transmission du terminal émetteur ;
dans lequel le cryptogramme chiffré comprend : la signature, le cryptogramme de clé aléatoire et les informations de transmission chiffrées.

8. Procédé de chiffrement d'informations, appliqué à un côté de terminal, comprenant les étapes ci-dessous consistant à :
créer, par le biais d'un terminal émetteur, une clé aléatoire sur un serveur de réseau (S101) ;
chiffrer, par le biais du terminal émetteur, des informations à transmettre selon une clé commune négociée avec un terminal récepteur et la clé aléatoire, en vue d'obtenir un cryptogramme chiffré (S102) ; et
transmettre, par le biais du terminal émetteur, le cryptogramme chiffré au terminal récepteur (S103) ; dans lequel :
la clé aléatoire comprend un identificateur de clé aléatoire et une clé correspondant à l'identificateur de clé aléatoire ;
dans lequel,
l'étape consistant à chiffrer, par le biais du terminal émetteur, les informations à transmettre selon la clé commune et la clé aléatoire, en vue d'obtenir un cryptogramme chiffré (S102) comprend les étapes ci-dessous consistant à :
générer une signature en adoptant un algorithme de signature pour la clé commune ;
chiffrer l'identificateur de clé aléatoire en utilisant la clé commune, en tant que clé, en vue de générer un cryptogramme de clé aléatoire ;
chiffrer les informations à transmettre en utilisant une combinaison de la clé commune et d'une clé correspondant à l'identificateur de clé aléatoire, en tant que clé, en vue d'obtenir des informations de transmission chiffrées ; et
combiner la signature, le cryptogramme de clé aléatoire et les informations de transmission chiffrées en vue de générer le cryptogramme chiffré.

9. Procédé de gestion de clés basé sur le procédé de chiffrement d'informations selon la revendication 8, comprenant en outre les étapes ci-dessous consistant à :
après avoir transmis le cryptogramme chiffré au terminal récepteur, transmettre, par le biais du terminal émetteur, une instruction de suppression ou de blocage de la clé aléatoire au serveur de réseau, ou définir, par le biais du terminal émetteur, une règle de suppression ou de blocage de la clé aléatoire sur le serveur de réseau ; dans lequel
l'étape consistant à définir, par le biais du terminal émetteur, la règle de suppression ou de blocage de la clé aléatoire sur le serveur de réseau comprend une ou plusieurs des étapes ci-dessous consistant à :
définir un temporisateur, et supprimer ou bloquer la clé aléatoire lorsque l'heure après la création de la clé aléatoire sur le serveur de réseau atteint l'heure définie par le temporisateur ; et
définir un seuil de temps au cours duquel la clé aléatoire est interrogée par le même terminal récepteur, et supprimer ou bloquer la clé aléatoire lorsque les heures où le même terminal récepteur interroge la clé aléatoire atteignent le seuil de temps ; et
transmettre, par le biais du terminal émetteur, une instruction de déblocage de la clé aléatoire au serveur de réseau.

10. Procédé selon la revendication 9, dans lequel le procédé comprend en outre l'étape ci-dessous dans laquelle :
le terminal émetteur définit une règle d'interrogation de la clé aléatoire sur le serveur de réseau.

11. Procédé selon la revendication 10, dans lequel la règle d'interrogation de la clé aléatoire comprend un ou plusieurs des éléments suivants :
une liste d'utilisateurs autorisés à interroger la clé aléatoire ;
des heures autorisées pour interroger la clé aléatoire ; et
des périodes de temps autorisées pour interroger la clé aléatoire.

12. Procédé de déchiffrement d'informations correspondant au procédé de chiffrement d'informations selon la revendication 8, appliqué à un côté de terminal, comprenant les étapes ci-dessous consistant à :
recevoir, par le biais d'un terminal récepteur, un cryptogramme chiffré transmis par un terminal émetteur (S201) ; et
acquérir, par le biais du terminal récepteur, une clé aléatoire créée par le terminal émetteur, auprès d'un serveur de réseau, selon le cryptogramme chiffré (S202), et suite à l'acquisition de la clé aléatoire, déchiffrer le cryptogramme chiffré en utilisant une clé commune négociée avec le terminal émetteur et la clé aléatoire (S203).

13. Procédé selon la revendication 12, dans lequel :
le cryptogramme chiffré contient un identificateur de clé aléatoire, et l'étape consistant à acquérir, par le biais du terminal récepteur, la clé aléatoire créée par le terminal émetteur, auprès du serveur de réseau, selon le cryptogramme chiffré, comprend l'étape ci-dessous dans laquelle :
le terminal récepteur analyse le cryptogramme chiffré en vue d'acquérir l'identificateur de clé aléatoire, et acquiert la clé aléatoire correspondant à l'identificateur de clé aléatoire, auprès du serveur de réseau, selon l'identificateur de clé aléatoire.

14. Procédé selon la revendication 12, dans lequel :
le cryptogramme chiffré comprend : une signature, un cryptogramme de clé aléatoire et des informations de transmission chiffrées ; et
l'étape dans laquelle le terminal récepteur acquiert la clé aléatoire créée par le terminal récepteur, auprès du serveur de réseau, et si la clé aléatoire est acquise, déchiffre le cryptogramme chiffré en utilisant la clé commune et la clé aléatoire, comprend les étapes ci-dessous dans lesquelles :
le terminal récepteur génère une signature en adoptant un algorithme de signature pour la clé commune, évalue si la signature est compatible avec la signature dans le cryptogramme chiffré, déchiffre le cryptogramme de clé aléatoire dans le cryptogramme chiffré en utilisant la clé commune, en vue d'obtenir un identificateur de clé aléatoire, lorsque la signature est compatible avec la signature dans le cryptogramme chiffré, interroge le serveur de réseau en ce qui concerne une clé correspondant à l'identificateur de clé aléatoire selon l'identificateur de clé aléatoire, et lorsque la clé correspondant à l'identificateur de clé aléatoire est interrogée, déchiffre les informations de transmission chiffrées en utilisant une combinaison de la clé commune et de la clé acquise correspondant à l'identificateur de clé aléatoire, en tant que clé, en vue d'obtenir les informations de transmission du terminal émetteur.
